# EUROPEAN PATENT APPLICATION

(11) **EP 2 618 235 A1**
(43) Date of publication of application: **24.07.2013**
(21) Application number: 12151613.2
(22) Date of filing: 18.01.2012
(51) Int. Cl.: G06F 1/16, H04N 9/31, G03B 17/54

(54) **A projection application device working through a wireless video output device and its video output control unit**

(71) Applicant: Aiptek International Inc., Hsin-Chu 30078 (TW)
(72) Inventor: Wu, Hui-Hsien, Hsinchu Science Park, Hsin-Chu (TW); Chen, Wei-Hong, Hsinchu Science Park, Hsin-Chu (TW); Liu, Heng, Hsinchu Science Park, Hsin-Chu (TW)
(74) Representative: Zaboliene, Reda

(57) **Abstract**

The present invention provides a projection application device which is working through a wireless video output device and its video output control unit. The video output device includes a microprocessor. A video output unit is coupled to the microprocessor for outputting a video data. A video output control unit is coupled to the microprocessor for controlling a projecting image outputted by the projection device. The video output control unit includes a designation unit for designating the video data to the projection device or the video output device.

## Description

### TECHNICAL FIELD

The present invention generally relates to a video output system, more particularly, to a projection application device working through a wireless video output device and its video output control unit.

### BACKGROUND

For general video devices (digital video camera or digital camera), after capturing moving or still images from outside, audio and video data will be processing and converting for digitization, and then stored in a memory built within the video devices. The operator can operate to preview dynamic or static images on screen through a display of the video devices. As the captured image data is prepared for the external projection brief, the dynamic or static images data stored in the video devices will be transmitted to a computer by a transmission line. The dynamic or static images data will be processed by the related driver and edition program of the computer for transferring the files and related processing. The computer is connected to a digital projector for playing the dynamic or static images.

Currently, as a projection brief is prepared in the public meeting, you must carry a mobile computer and a digital projector, and thereby the transferred video files of the video device rendering outside projection to show by the digital projector. To complete the projection, the video files need to be filed and stored on the computer, and a mobile computer and a digital projector are required for the digital projection. Processing procedures of conversion and transmission for the digital data are complicated. It is inconvenient for a user due to heavy and more hardware apparatus. Moreover, the conventional video projector is always combined with the computer which applications are monotonous and unchanged.

Therefore, based-on the shortcomings, the present invention provide a handheld touch wireless video output device applied for a mobile projector, which can be down link by an application platform and activate projecting to output images by specified multiple functions units.

### SUMMARY OF THE INVENTION

An objective of the present invention is to provide an application module applied for a projection device, wherein a handheld touch wireless video output device can be down link by an application platform and activate projecting to output images by specified multiple functions units.

According to an aspect of the present invention, the present invention provides a video output device applied for a projection device, which comprises a micro-processor unit. A video output unit is coupled to the micro-processor unit for outputting a first video data. A video output control unit is coupled to the micro-processor unit for controlling a projection image output by the projection device, wherein the video output control unit comprises a designation unit for designating the first video data outputting to the projection device or the video output device. A display unit is coupled to the micro-processor unit.

The video output control unit further comprises a specified frame activation unit, a frame control unit for controlling the projection image, and a gesture and pointing activation unit for activating to detect a gesture and its pointing for the projection image, and manipulating the projection image, a video data transmission and reception activation unit for activating the first video data and/or a second video data transmission and reception, for facilitating projecting to output the first video data and/or the second video data in real-time or synchronously.

According to another aspect of the present invention, the present invention provides a system for a projection device combining with a video output device.

### BRIEF DESCRIPTION OF THE DRAWINGS

The components, characteristics and advantages of the present invention may be understood by the detailed descriptions of the preferred embodiments outlined in the specification and the drawings attached:

FIG. 1 illustrates a functional block of the projection device and the video output device of an embodiment of the present invention;

FIG. 2 illustrates a diagram of the video output control unit of an embodiment of the present invention;

FIG. 3 illustrates a functional block of the projection device and the video output device of an embodiment of the present invention;

FIG. 4 illustrates a functional block of the projection device and the video output device of an embodiment of the present invention;

FIG. 5 illustrates a functional block of the projection device and the video output device of an embodiment of the present invention;

FIG. 6 illustrates a functional block of the projection device and the video output device of an embodiment of the present invention;

FIG. 7 illustrates a functional block of the projection device and the video output device of an embodiment of the present invention.

### DETAILED DESCRIPTION

Some preferred embodiments of the present invention will now be described in greater detail. However, it should be recognized that the preferred embodiments of the present invention are provided for illustration rather than limiting the present invention. In addition, the present invention can be practiced in a wide range of other embodiments besides those explicitly described, and the scope of the present invention is not expressly limited except as specified in the accompanying claims.

References in the specification to "one embodiment" or "an embodiment" refers to a particular feature, structure, or characteristic described in connection with the preferred embodiments is included in at least one embodiment of the present invention. Therefore, the various appearances of "in one embodiment" or "in an embodiment" do not necessarily refer to the same embodiment. Moreover, the particular feature, structure or characteristic of the invention may be appropriately combined in one or more preferred embodiments.

The present invention provides a projection application device working through a wireless video output device and its video output control unit. The video output device is electrically connected to the projection device for an image projection. The video output device comprises a video output control unit electrically connected to a micro-processor unit of the projection device. Moreover, the projection device may be connected to an external power supply for charging the projection device and the video output device.

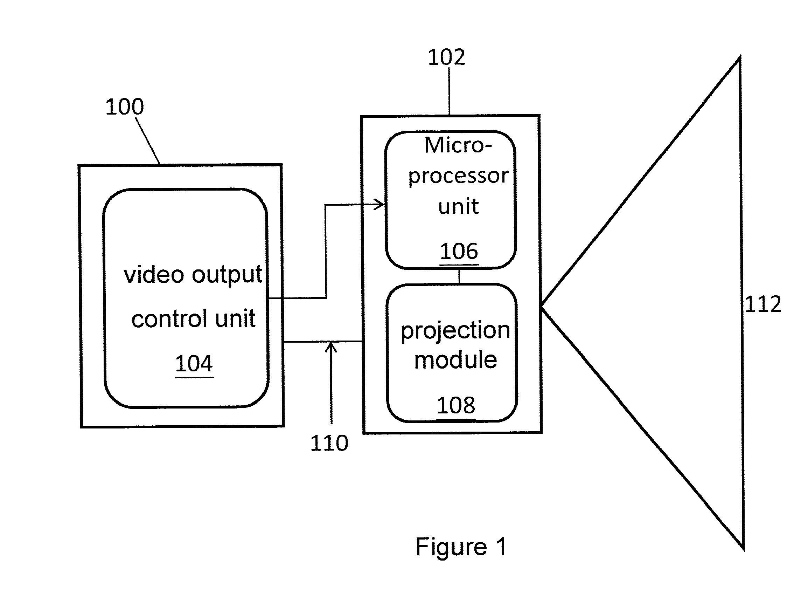

Figure.1 shows a functional block of the projection device and the video output device of an embodiment of the present invention. In one embodiment, the projection device 102 may be a mobile projector, and the video output device 100 may be a portable electronic device, for example, a touch wireless video output device, a mobile phone, a smart phone, a portable game console, a personal digital assistant (PDA), a notebook or a Tablet PC. In this embodiment, the video output device 100 comprises a video output control unit 104, and the projection device 102 comprises a micro-processor unit 106 and a projection module 108. The video output control unit 104 is coupled to the micro-processor unit 106, and the micro-processor unit 106 is coupled to the projection module 108. For example, the video output control unit 104 is coupled to the micro-processor unit 106 via an interface. The micro-processor unit 106 is a micro-processor chip. In one embodiment, a command is issued from the video output control unit 104 to the micro-processor unit 106. The video data output from the video output device 100 is processed by the micro-processor 106 and then the image projection picture 112 is output to project by the projection module 108. Magnification of the image projection picture l 12 may be adjusted which depends on the actual applications or requirements. In other words, a command issued from the video output control unit 104 may be utilized to directly or indirectly control the video picture output. In one embodiment, the connection (or communication) mode 110 between the projection device 102 and the video output device 100 comprises the followings: a). the output/input port-to-port connection, the port (interface) of the projection device 102 directly inserting into the port of the video output device 100; b). wireless transmission connection, through the respective device's built-in wireless module for connection; c). using a connecting wire (line) to connect. In one embodiment, a special application software can be downloaded to the video output device 100 as the video output control unit 104. The downloading way may be performed through a wired network, a wireless transmission or a storage media (CD or flash drive) to download. For example, the video output control unit 104 of the present invention may be obtained by wireless downloading from a trading platform of a wireless applications store (a software platform of wireless downloading) to store into the video output device 100. Therefore, the video output control unit 104 of the present invention may be a downloaded application software. As the application software is downloaded to store into the wireless video output device 100 while the wireless video output device 100 is physically linked to the mobile projection device 102, the application software may control the micro-processor chip 106 of the mobile projection device 102 to achieve the design specified projection screen.

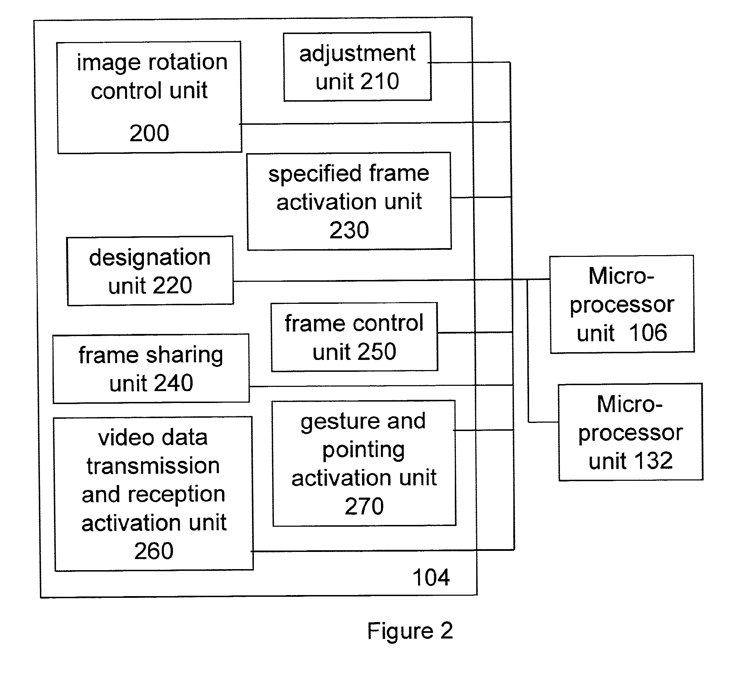

Figure.2 shows a diagram of the video output control unit of an embodiment of the present invention. The video output control unit 104 comprises an image rotation control unit 200, an adjustment unit 210, a designation unit 220, a specified frame activation unit 230, a frame sharing unit 240, a frame control unit 250, a video data transmission and reception activation unit 260 and a gesture and pointing activation unit 270. The rotation direction and angle of the projected image can be controlled by the image rotation control unit 200. For example, it can be rotated by 90, 180, 270 and 360 degree angle in clockwise or counterclockwise. The contrast ratio and brightness of the projection image or broadcasting volume can be adjusted by the adjustment unit 210.

The video frame may be output to any desire device as designated or determined by the designation unit 220. For example, a certain (first) frame of a video output terminal (video output device 100) may be designated for outputting to a projection terminal (projection device 102), and another (second) frame designated for outputting on the screen itself of the video output device 100, by the designation unit 220. In other words, the projection picture (image) content output by the projection device 102 may be inconsistent with the shown frame on the video output device 100. Users can decide a video frame output to any output device by the designation unit 220, to determine the video frame output to the video output terminal or the projection terminal. The above-mentioned designation may be performed in real-time or synchronously in the projection and/or display process. The specified frame activation unit 230 may be used to activate a specified frame, for example a keyboard frame and/or a mouse-like interface frame. In one embodiment, a specified frame is designated to project, while open the specified frame activation unit 230, the display screen of the handheld touch wireless video output device 100 will show (display) the keyboard frame and the mouse-like interface frame for providing the user to touch the keyboard frame and the mouse-like interface frame as typing and cursor control, and the typing input or the control frame may be shown on the projection end. This is the application of the second device's screen.

The frame sharing unit 240 may be for sharing a projection image. Multiple video output devices 100 may be sharing the identical frame with each other by the frame sharing unit 240, and project to output the frame to the projection device 102 in real-time or synchronously. In one embodiment, as a certain (first) wireless video output device (master device) 100, for example a smart phone, is coupled to the projection device 102, and then activates an interactive game built-in the video output control unit 104 or a network game as image projecting, and thereby another (second) smart phone (slave device) with the video output control unit 104 making a double play with the master device by a wireless transceiver module (such as RF module or Bluetooth module). Based-on the frame sharing unit 240, the second smart phone can obtained the identical frame synchronously, and utilizes a control cursor or a manipulation interface shown on the screen to join the interactive game or the internet game. The frame of the interactive game or the internet game may be projecting to output in real-time or synchronously by the projection device 102, and the game results will be recorded in the master device 100. In another embodiment, the frame of the internet game may be shown in real time via a wired transmission mode, for example shown on a tablet PC. Multiple video output devices may be playing an interactive game with each other by utilizing the frame sharing unit 240.

The frame control unit 250 can be for controlling the projection image. As a certain handheld touch wireless device (master device) 100 is coupled to the projection device 102, and then activates the video output control unit 104 for projecting to output images. Another wireless device (slave device) with the video output control unit 104 can receive a projection output signal via a wireless module and utilize a cursor indication or a manipulation interface for controlling pointing and showing of the projection frames. Another video output device can make a pointing and a remote control for the projection frames by utilizing the frame control unit 250.

The video data transmission and reception activation unit 260 is used for activating video transmission and reception, projecting to output such video in real-time or synchronously. In one embodiment, as a certain (first) wireless video output device 100, for example a smart phone, is coupled to the projection device 102, and then activates the video output control unit 104 as image projecting, while calling to the another (second) smart phone with the video output control unit 104, the second smart phone starting the video output control unit synchronously and receiving the call. The real time image captured by self photographic lens built-in the second smart phone can be projected synchronously via the first smart phone terminal as the second smart phone responds to the call. As the second smart phone is coupled to a mobile projection device, the real time image captured by self photographic lens built-in the first smart phone can be projected synchronously via the second smart phone terminal. It should be noted that the function and application of the video screen can be achieved by utilizing the video data transmission and reception activation unit 260.

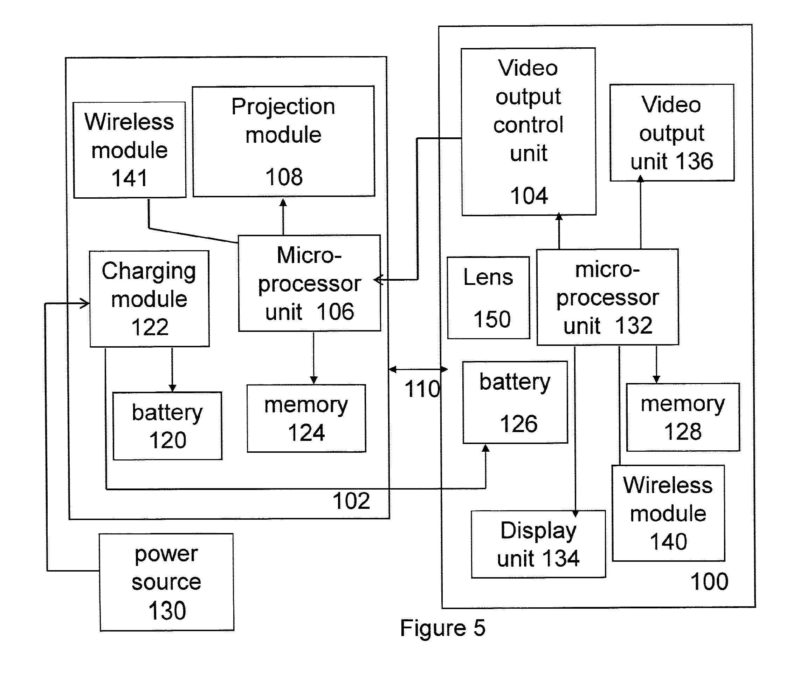

The gesture and pointing activation unit 270 can be for activating to detect the gesture and its pointing for projection screen (image), and manipulating the projection image output by the mobile projection device 102. In one embodiment, a photographic lens 150 (shown in Figure 5) can be built-in the handheld touch wireless video output device 100. The built-in photographic lens 150 is used for capturing to obtain the coordinate location of the gesture and pointing of any person locating (standing) at the projecting side, and then manipulating the projecting image synchronously by computing.

According to the above-mentioned purpose, the wireless video output device 100 further comprises an acceleration sensor and a gesture recognition module. The acceleration sensor is electrically connected to a micro-processor unit for outputting the gesture and pointing of the acceleration sensor to the micro-processor unit. The gesture recognition module is electrically connected to the micro-processor unit for processing the gesture and pointing signals of the acceleration sensor which are sent from the micro-processor unit. A database is stored into a memory, and a raw data of multiple gestures and their pointing is stored into the database. As comparing the raw data of multiple gestures and its pointing stored into the database by utilizing the gesture recognition module, it can analyze data or signals of the current gestures and their pointing.

The above-mentioned image rotation control unit 200, the adjustment unit 210, the designation unit 220, the specified frame activation unit 230, the frame sharing unit 240, the frame control unit 250, the video data transmission and reception activation unit 260 and the gesture and pointing activation unit 270 are coupled to the micro-processor unit 106 and the micro-processor unit 132. These functional units are all outputting to the micro-processor unit 106 of the mobile projection device 102 for controlling the output of the projection image or picture. Theses functional units may be performed by some commands, software or programs.

As above-mentioned, the video output control unit 104 has at least the following functions:
1. controlling rotation direction and angle of the projected image;
2. adjusting contrast ratio and brightness of the projection image or broadcasting volume;
3. designating video data or frame for outputting to any desire device;
4. activating keyboard frame and/or mouse-like interface frame;
5. sharing frame, outputting the frame in real-time or synchronously;
6. controlling the projection image;
7. activating video transmission and reception, projecting to output such video in real-time or synchronously;
8. activating to detect the gesture and pointing for projection screen.

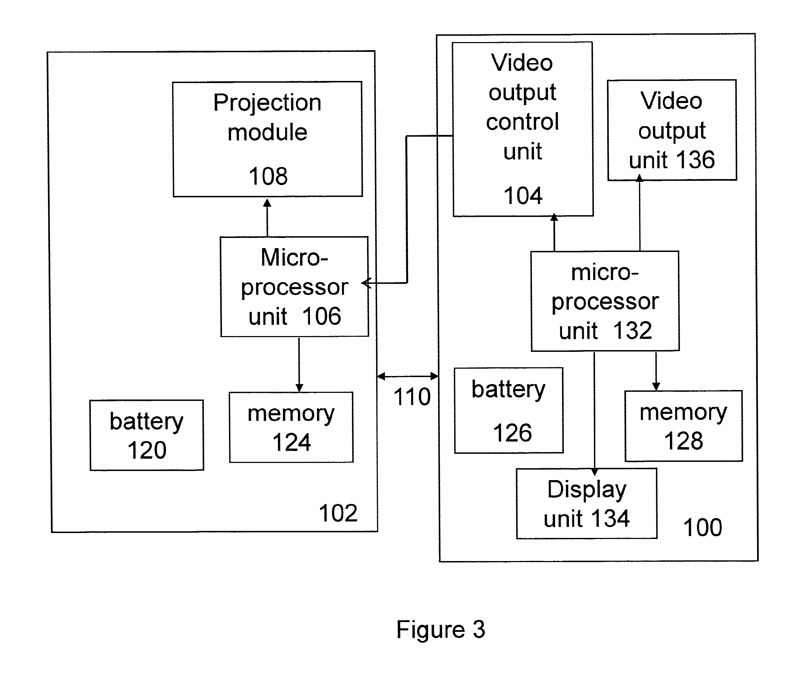

Figure.3 shows a functional block of the projection device and the video output device of an embodiment of the present invention. In this embodiment, a battery 120 and a battery 126 are providing electrical power to the projection device 102 and the video output device 100, respectively. The video output device 100 further comprises a micro-processor unit 132, a memory 128, a display unit 134 and a video output unit 136. The memory 128, the display unit 134 and the video output unit 136 are coupled to the micro-processor unit 132, respectively. The video frame may be output on the display unit 134 by its video output unit 136 of the video output device 100. The memory 128 can be for storing data, for example video data. The projection device 102 may optionally comprises a memory 124 for storing data. The memory 124 is coupled to the micro-processor unit 106.

In one embodiment, the display unit 134 comprises a LCD. Video frame, a cursor, a manipulation interface, a keyboard frame, and/or a mouse-like interface frame may be displayed on the screen by the display unit 134.

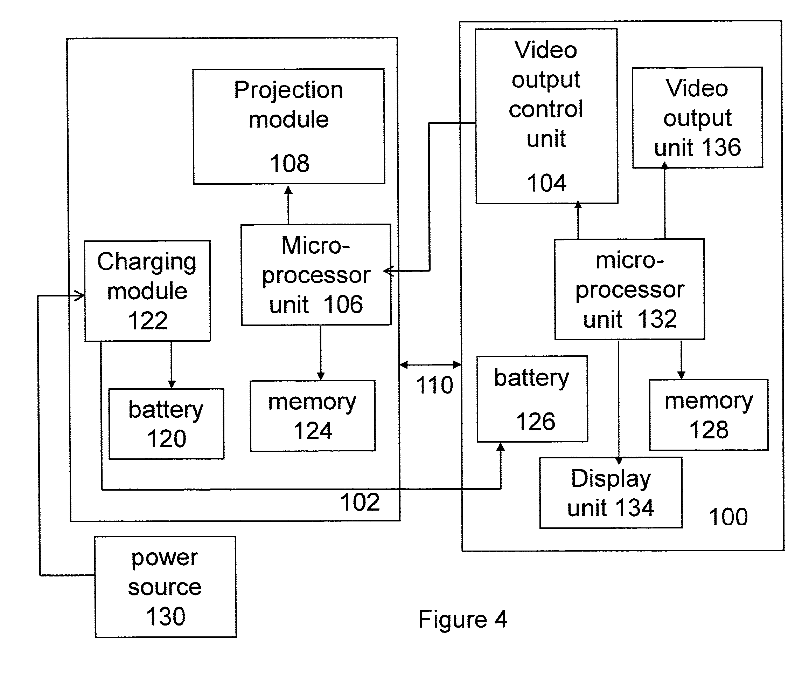

In another embodiment, the projection device 102 further comprises a charging module 122, shown in figure 4. An external power source 130 is connected to the projection device 102 for providing electrical power or charging. The charging module 122 may be coupled to the battery 120 and the battery 126. In this embodiment, the charging module 122 is integrated into the projection device 102 such that the projection device 102 becomes a mobile projector with power supply function as connected to the external power source 130. In other words, as the projection device 102 is electrically connected to the video output device 100, the external power source 130 may provide electrical power or charging to the video output device 100 and the projection device 102.

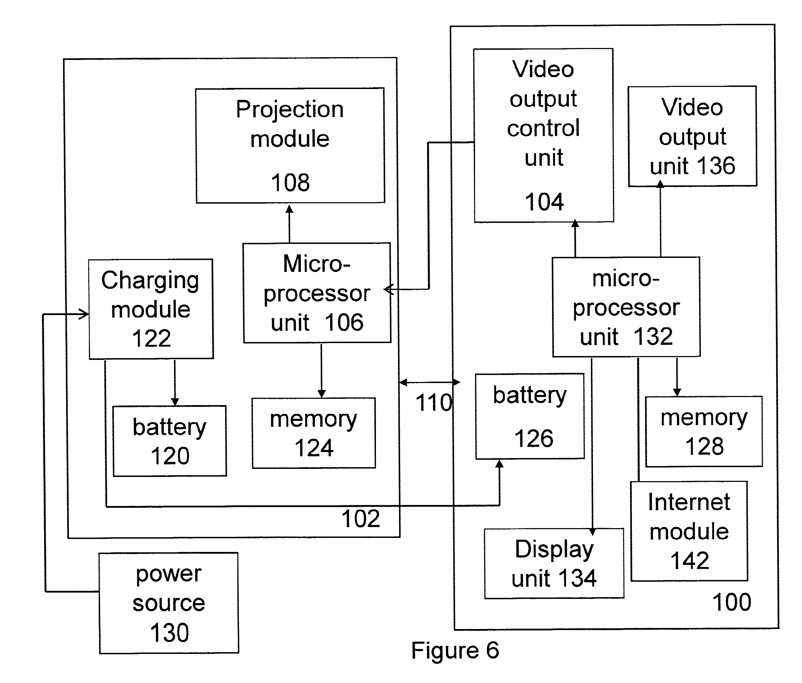

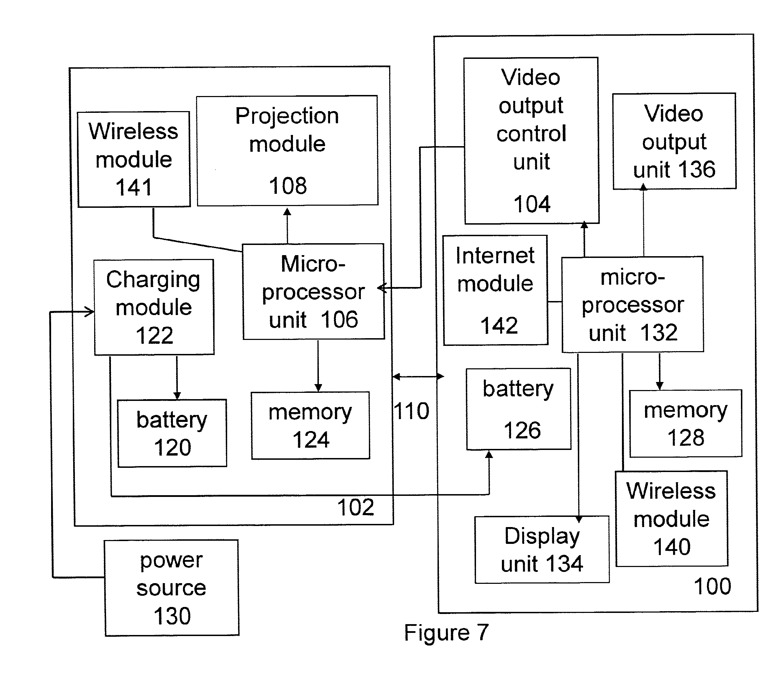

In another embodiment, the video output device 100 further comprises a wireless module 140, a photographic lens 150; and the projection device 102 further comprises a wireless module 141, shown in figure 5. The video output device 100 is for example a smart phone. The wireless module 140 and 141 are a wireless transceiver module, for example a RF module or a Bluetooth module. The wireless video output device 100 may be transmitting and receiving wireless signals or data to/from the projection device 102 by utilizing the wireless module 140 and 141. By utilizing the wireless module 140, two wireless video output devices built-in the wireless module 140 may be transmitting and receiving wireless signals or data with each other. The photographic lens 150 may be used for capturing images of the external object. In another embodiment, the video output device 100 further comprises an internet module 142, shown in figure 6. In this embodiment, the video output device 100 is for example a tablet PC. By utilizing the internet module 142, two video output devices built-in the internet module 142 may be transmitting and receiving wired signals or data with each other. The video output device 100 can browse the down link information or images in real-time via the internet module 142, and further the browsing images by a browser can be projected to output by the projection device 102. On the other hand, data stored into the memory of the video output device 100 can be output and displaying on the display unit 134 of the video output device 100 or projecting to output by the projection device 102. Moreover, the wireless module 140 and the internet module 142 may be integrated into the video output device 100, shown in figure 7. The above-mentioned embodiments, the charging module 122 is optionally.

The foregoing descriptions are preferred embodiments of the present invention. As is understood by a person skilled in the art, the aforementioned preferred embodiments of the present invention are illustrative of the present invention rather than limiting the present invention. The present invention is intended to cover various modifications and similar arrangements included within the spirit and scope of the appended claims, the scope of which should be accorded the broadest interpretation so as to encompass all such modifications and similar structures.

## Claims

1. A video output device applied for a projection device, which **characterizes in that** comprises:
a micro-processor unit;
a video output unit, coupled to said micro-processor unit for outputting a first video data;
a video output control unit, coupled to said micro-processor unit for controlling a projection image output by said projection device, wherein said video output control unit comprises a designation unit for designating said first video data outputting to said projection device or said video output device ; and
a display unit, coupled to said micro-processor unit.

2. The device of claim 1, wherein said video output control unit further comprises a specified frame activation unit.

3. The device of claim 2, wherein said video output control unit further comprises a frame sharing unit for sharing said projection image.

4. The device of claim 3, wherein said video output control unit further comprises a frame control unit for controlling said projection image, and a gesture and pointing activation unit for activating to detect a gesture and its pointing for said projection image, and manipulating said projection image.

5. The device of claim 4, wherein said video output control unit further comprises a video data transmission and reception activation unit for activating said first video data and/or a second video data transmission and reception, for facilitating projecting to output said first video data and/or said second video data in real-time or synchronously.

6. The device of claim 1, wherein said video output device comprises a touch wireless video output device, a mobile phone, a smart phone, a portable game console, a personal digital assistant (PDA), a notebook or a Tablet PC, wherein connection mode between said video output device and said projection device comprises an output/input port-to-port connection, a wireless transmission connection or a wire connection.

7. A system for a projection device combining with a video output device, which **characterizes in that** comprises:
a projection device, having a first micro-processor unit and a projection module;
at least one video output device, each of said at least one video output device comprising
a second micro-processor unit;
a video output unit, coupled to said second micro-processor unit for outputting a first video data;
a video output control unit, coupled to said first and said second micro-processor unit for controlling a projection image output by said projection device, wherein said video output control unit comprises a designation unit for designating said first video data outputting to said projection device or said at least one video output device ; and
a display unit, coupled to said second micro-processor unit.

8. The system of claim 7, wherein said video output control unit further comprises a specified frame activation unit.

9. The system of claim 8, wherein said video output control unit further comprises a frame sharing unit for sharing said projection image.

10. The system of claim 9, wherein said video output control unit further comprises a frame control unit for controlling said projection image, and a gesture and pointing activation unit for activating to detect a gesture and its pointing for said projection image, and manipulating said projection image.

11. The system of claim 10, wherein said video output control unit further comprises a video data transmission and reception activation unit for facilitating an image captured by a photographic lens built-in said video output device for projecting to output in real-time or synchronously.

12. The system of claim 7, wherein said video output device comprises a touch wireless video output device, a mobile phone, a smart phone, a portable game console, a personal digital assistant (PDA), a notebook or a Tablet PC, wherein connection mode between said video output device and said projection device comprises an output/input port-to-port connection, a wireless transmission connection or a wire connection.

13. A video output control unit applied for a projection device, which **characterizes in that** comprises:
a designation unit for designating a first video data outputting to said projection device or
a video output device ;
a specified frame activation unit for activating a specified frame; and
a frame sharing unit for sharing a projection image of said projection device.

14. The device of claim 13, further comprising a frame control unit for controlling said projection image, a gesture and pointing activation unit for activating to detect a gesture and its pointing for said projection image and manipulating said projection image, a video data transmission and reception activation unit for activating said first video data and/or a second video data transmission and reception for facilitating projecting to output said first video data and/or said second video data in real-time or synchronously; and the combination thereof.

15. The device of claim 13, wherein said video output device comprises a touch wireless video output device, a mobile phone, a smart phone, a portable game console, a personal digital assistant (PDA), a notebook or a Tablet PC.
